# EUROPEAN PATENT APPLICATION

(11) **EP 1 864 745 A1**
(43) Date of publication of application: **12.12.2007**
(21) Application number: 05720494.3
(22) Date of filing: 10.03.2005
(51) Int. Cl.: B23K 9/12, B25J 15/04

(54) **METHOD OF SWITCHING BETWEEN SINGLE TORCH AND TANDEM TORCH**

(71) Applicant: KOMATSU ENGINEERING CO., LTD., Minato-ku Tokyo, 1070052 (JP)
(72) Inventor: TABATA, Keiji c/o KOMATSU ENGINEERING CO., LTD.,, Komatsu-shi Ishikawa 9238605 (JP); MORI, Hiroki c/o KOMATSU ENGINEERING CO., LTD.,, Komatsu-shi Ishikawa 9238605 (JP); KITA, Katsunori c/o KOMATSU ENGINEERING CO., LTD.,, Komatsu-shi Ishikawa 9238605 (JP)
(74) Representative: Wunderlich, Rainer
(86) International application number: PCT/JP2005/004223
(87) International publication number: WO 2006/095428

(57) **Abstract**

Technology is provided which enables switching between a single-torch state and a tandem-torch state using a small number of torches and a simple structure. Technology is also provided which reduces torch replacement work during welding. A first torch 6 is supported by an arm tip 51 of a welding robot through a first bracket 52 having a joint holder 4. A second torch 15 supported by a second bracket 12 having a joint 13 stands by on a torch holder 10 which is provided in a movable region of the arm tip 51. The arm tip 51 moves to the position of the torch holder 5, and the second torch 15 is transferred between the arm tip and the torch holder, thereby achieving switching between the single-torch state and the tandem-torch state.

## Description

### TECHNICAL FIELD

The present invention relates to a method of switching between a single-torch state in which one torch is attached to a welding robot and a tandem-torch state in which two or more torches are attached to the welding robot, when welding a workpiece using the welding robot.

### BACKGROUND ART

Single-torch welding and tandem-torch welding are known in the art, single-torch welding is performed in a state in which one torch is attached to a welding robot, and tandem-torch welding is performed in a state in which two or more torches are attached to the welding robot and operated at the same time. Since the weld speed can be increased by tandem-torch welding, tandem-torch welding has an advantage in that a large workpiece with a long weld line can be welded in a short period of time.

However, a narrow portion or a winding portion cannot be welded by tandem-torch welding. Therefore, when a large workpiece has a portion which cannot be welded by tandem-torch welding, a method where the entire welding portion of the workpiece is welded by single-torch welding, or a method where the workpiece is welded by tandem-torch welding while skipping the portion which cannot be welded and a worker manually welds the skipped portion are adopted.

According to the former method, since the entire workpiece must be welded by single-torch welding when a large workpiece has a portion which cannot be welded by tandem-torch welding, the welding efficiency deteriorates to a large extent depending on the shape of the workpiece. The method of combining tandem-torch welding and manual welding has a problem in that the entire welding operation cannot be automated.

In order to solve these problems, JP-A-2004-314104 applied for by the applicant of this application discloses technology in which one of the tandem torches is withdrawn during welding and a narrow portion or a winding portion is welded using the remaining torch.

According to the technology disclosed in the above document, a welding head is provided with welding torches or torches including a welding torch and a melting torch, and the forward/backward movement of one of the torches is freely controlled with respect to the other torch. According to this technology, when welding a narrow portion using the welding head provided with the welding torches, the workpiece is welded in a state in which one of the welding torches is moved forward. On the other hand, when welding a broad portion at a high speed, the workpiece is welded in a state in which the welding torches are disposed at an equivalent position and operated at the same time.

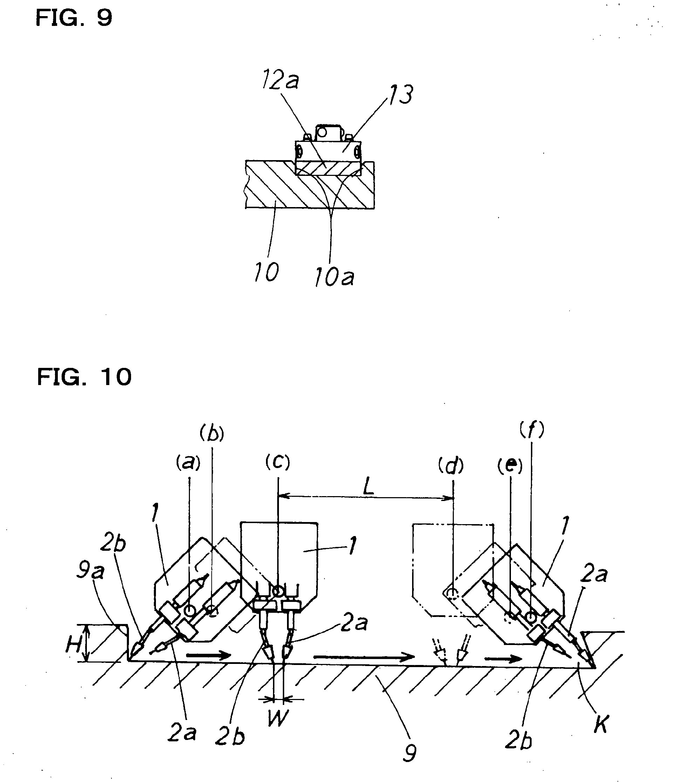

An example of the welding method disclosed in the above document is described below with reference to FIG 10. In the example shown in FIG. 10, a step 9a with a height of H, which interferes with the torch, and a narrow portion K respectively exist at a welding start position (a) and a finish position (f). A front torch 2a disposed on the front side in the traveling direction indicated by the arrow in FIG. 10 is withdrawn at the welding start position (a). A welding head 1 is then tilted clockwise, and the tip of a rear torch 2b disposed on the rear side in the traveling direction approaches the step 9a of a workpiece 9 to start welding.

When the welding head has moved over the distance so that the front torch 2a does not interfere with the step 9a (position (b)), the front torch 2a is moved forward and the welding head is caused to stand upright. The front torch then produces an arc, whereby the workpiece is welded using the torches 2a and 2b. When the front torch has produced an arc, the traveling speed of the welding head 1 increases when the welding head 1 has moved by an interval w between the tips of the front torch 2a and the rear torch 2b so that a flat portion L is welded at a high speed.

When the welding head 1 approaches the narrow portion K which is the end of the weld line, the speed of the welding head 1 decreases. After the deceleration operation has been completed, the rear torch 2b stops producing an arc when the welding head 1 has moved by the interval w, and is withdrawn. The welding head 1 is then tilted counterclockwise. The welding head 1 moves to the welding finish position (f) in this state, and the front torch 2a stops producing an arc to complete welding. [Patent Document 1] JP-A-2004-314104

### DISCLOSURE OF THE INVENTION

### PROBLEM TO BE SOLVED BY THE INVENTION

A method of automatically switching between single-torch welding and tandem-torch welding by automatically switching between a torch unit provided with one torch and a torch unit provided with two torches requires three torches in total. Since each torch must be provided with a welding wire and a shielding gas/welding power supply device, the cost of the device increases and the torch attachment/detachment structure becomes complicated.

Moreover, torch replacement takes time, and welding is suspended during torch replacement. Therefore, it is desirable to avoid torch replacement during welding in order to reduce the weld time and improve the welding quality.

Meanwhile, the method of switching between the single-torch state and the tandem-torch state by moving the torch forward/backward requires that two welding wires, gas hoses, power supply cables, etc. remain connected during single-torch welding, the movement of the welding robot is limited. Therefore, a portion which cannot be welded may occur depending on the shape of the workpiece, whereby manual welding may be required after automatic welding.

### PROBLEMS TO BE SOLVED BY THE INVENTION

The invention provides technology which enables switching between a single-torch state and a tandem-torch state using a small number of torches and a simple structure. The invention also provides technology which enables switching between a single-torch state and a tandem-torch state at a desired level by reducing torch replacement work during welding.

In a welding torch switching method according to the invention, a first bracket 52 having a joint holder 4 is attached to a welding arm tip 51 of a welding robot, and a first torch 6 is supported by the first bracket 52. A second torch 15 supported by a second bracket 12 having a joint 13 stands by while being held by a torch holder 10 provided in a movable region of the arm tip 51 of the welding robot. The arm tip 51 moves to the position of the torch holder 5, and the second torch 15 is transferred between the arm tip and the torch holder, thereby achieving switching between a single-torch state in which only the first torch 6 is attached to the arm tip 51 and a tandem-torch state in which the first torch 6 and the second torch 15 are attached to the arm tip.

The single-torch state is switched to the tandem-torch state by coupling the joint 13 of the second bracket 12 which stands by while being held by the torch holder 5 to the joint holder 4 of the first bracket 52 by means of the operation of the arm tip 51. The tandem-torch state is switched to the single-torch state by moving the arm tip 51 to the position of the torch holder 5 and separating the joint 13 of the second bracket 12 from the joint holder 4 of the first bracket 52 so that the second bracket 12 is held by the torch holder 5.

In the welding torch switching method according to the invention, the second bracket 12 can be provided with a forward/backward driving device 14 which appropriately moves the second torch 15 in the longitudinal direction thereof (i.e., direction in which the tip of the welding torch advances toward or retreats from the workpiece), and therefore, switching between the single-torch state and the tandem-torch state by torch replacement can be achieved, and simple switching between the single-torch state and the tandem-torch state by the relative forward/backward movement of the first torch 6 and the second torch 15 can be achieved.

The above simple switching between the single-torch state and the tandem-torch state may also be achieved by providing the first bracket 52 with a forward/backward driving device 5 which moves the first torch 6 forward/backward in the longitudinal direction thereof.

The forward/backward driving device 14 provided to the second bracket may be driven by providing the joint holder and the joint with fluid channels which communicate when the joint holder and the joint are coupled, supplying a fluid pressure such as air pressure or oil pressure to the joint holder 4 attached to the welding robot, and supplying the fluid pressure to the forward/backward driving device 14 through the fluid channels.

### EFFECT OF THE INVENTION

According to the method of the invention, switching between the single-torch state and the tandem-torch state of the welding robot is automatically achieved. Moreover, switching between the single-torch state and the tandem-torch state can be achieved using the permanent torch 6 and the torch 15 which is appropriately attached. It suffices to provide two welding wires, gas hoses, power supply cables, etc. connected to these torches.

According to the methods of claims 2 to 4, a workpiece is welded while optionally and automatically switching among complete single-torch welding (i.e., welding using a single torch attached to the welding robot, a single welding wire, a single gas hose, and a single power supply cable connected to the torch), convenient single-torch welding in which one of the two torches is withdrawn, and tandem-torch welding in which the torches are operated at the same time. Since switching between convenient single-torch welding and tandem-torch welding is achieved without interrupting the welding process, lost time due to torch switching does not occur, and high welding quality is achieved.

A workpiece is usually welded by tandem-torch welding using the tandem torch or convenient single-torch welding in which the torch is withdrawn, and the attached torch may be removed only when the workpiece cannot be welded by convenient single-torch welding. This reduces the number of detachment times of the attached torch, whereby the productivity of the welded structure increases.

### BRIEF DESCRIPTION OF THE DRAWINGS

FIG. 1 is a schematic view showing a torch switching method according to the invention.
FIG 2 is a side view showing the torch tip structure of a robot arm.
FIG 3 is a view along the line A-A in FIG. 2.
FIG 4 is a view along the arrow B in FIG. 2.
FIG. 5 is a view along the arrow C in FIG. 4.
FIG. 6 is view illustrative of the details of a joint section.
FIG. 7 is a front view of a second torch holder.
FIG. 8 is a top view of FIG. 7.
FIG. 9 is a cross-sectional view along the line D-D in FIG. 7.
FIG. 10 is a view showing a related-art welding method.

### EXPLANATION OF SYMBOLS

- 2: Joint holder
- 5: First forward/backward driving device
- 6: First torch
- 10: Torch holder
- 12: Second bracket
- 14: Forward/backward driving device
- 15: Second torch
- 51: Arm tip
- 52: First bracket

### BEST MODE FOR CARRYING OUT THE INVENTION

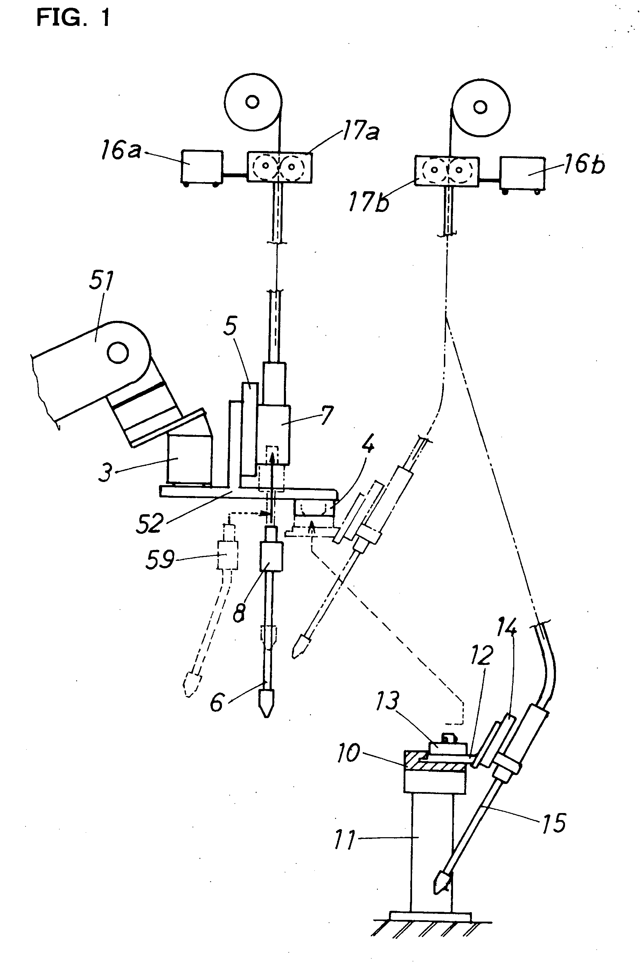

Embodiments of the invention are described below with reference to the drawings. FIG. 1 is a schematic view showing a torch switching method according to the invention. In FIG. 1, reference numeral 1 indicates an arm tip of a welding robot, reference numeral 52 indicates a first bracket attached to the arm tip 51 through a shock absorber 3, reference numeral 4 indicates a joint holder secured on the first bracket 52, reference numeral 5 indicates a first forward/backward driving device attached to the first bracket 52, and reference numeral 6 indicates a first torch attached to the first forward/backward driving device 5. The first torch 6 is a neck-change torch. A body 7 of the first torch 6 is attached to the first forward/backward driving device 6. A neck 8 can be attached to and detached from the body 7, and can be replaced with a replacement neck 59 using a known neck replacement device (not shown).

Reference numeral 10 indicates a torch holder attached to a stationary member 11 (e.g. main body casing of robot) in the movable region of the arm tip 51, reference numeral 12 indicates a second bracket detachably held by the torch holder 10, reference numeral 13 indicates a joint secured on the second bracket, reference numeral 14 indicates a second forward/backward driving device attached to the second bracket 12, and reference numeral 15 indicates a second torch attached to the second forward/backward driving device 14.

The welding torches 6 and 15 are respectively provided with power supply devices 16a and 16b and wire feeding devices 17a and 17b. An NC device (not shown), which controls the welding robot, controls the power supply voltage, power supply ON/OFF, the wire feed speed, the forward/backward movement of the forward/backward driving devices 5 and 14, and the like.

Solid lines shown in FIG. 1 indicate a single-torch state in which the second torch 15 is held by the torch holder 10 and stands by at a stationary position. Only the first torch 6 is attached to the arm tip 51 of the welding robot. A small workpiece or a narrow portion is automatically welded in the single-torch state, and as the need arises after replacing the neck 8 with the replacement neck 59.

The single-torch state is switched to the tandem-torch state by moving the arm tip 51 of the robot to the position of the torch holder 10 and coupling the joint holder 4 and the joint 13 by means of the operation of the arm tip. This allows the second torch 15 to be supported by the arm tip 51 in a state in which the tips of the torches 6 and 15 are closely positioned, as indicated by imaginary lines in FIG. 1. The first and second torches 6 and 15 start to produce an arc in this state and are moved by the arm tip 51, whereby high-speed tandem-torch welding is performed. When a step portion or a narrow welding portion (in which interference between the torch head and the workpiece can be avoided by withdrawing one of the two torches) exists during welding, such a portion is welded in a state in which one of the torches is withdrawn by the operation of the first or second forward/backward driving device 5 or 14. In this case, the operation of the torch is performed in the same manner as the related-art operation described with reference to FIG. 10.

When welding a narrow portion which cannot be welded even if one of the torches is withdrawn, a portion which requires a complicated torch operation, or the like, the arm tip 51 moves to the position of the torch holder 10, and the joint holder 4 and the joint 13 are separated in a state in which the second torch 15 is supported by the torch holder 10. This causes the tandem-torch state to be switched to the single-torch state. After optionally replacing the neck, single-torch welding is performed.

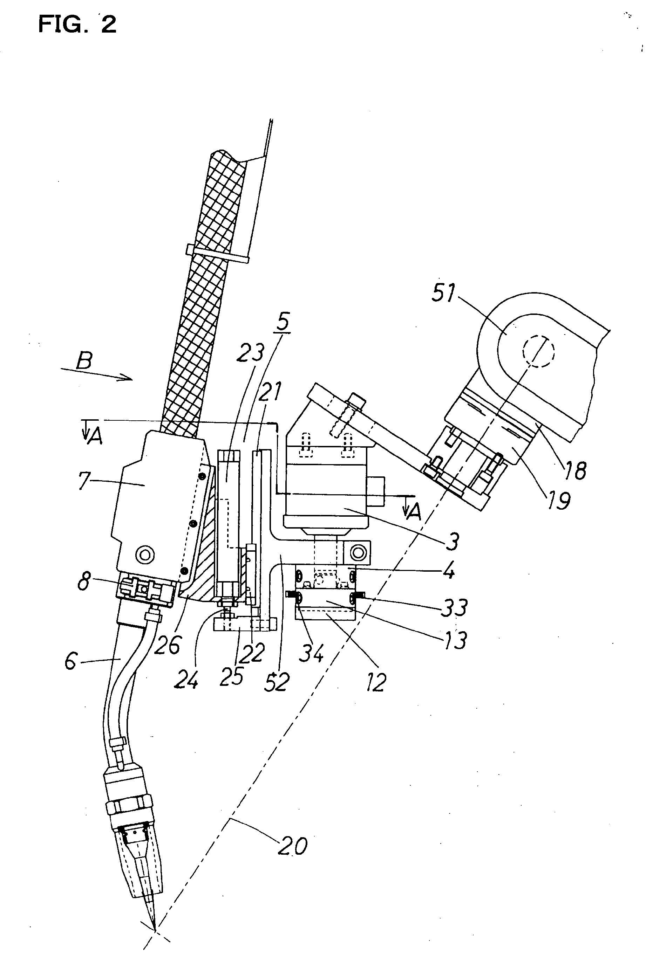

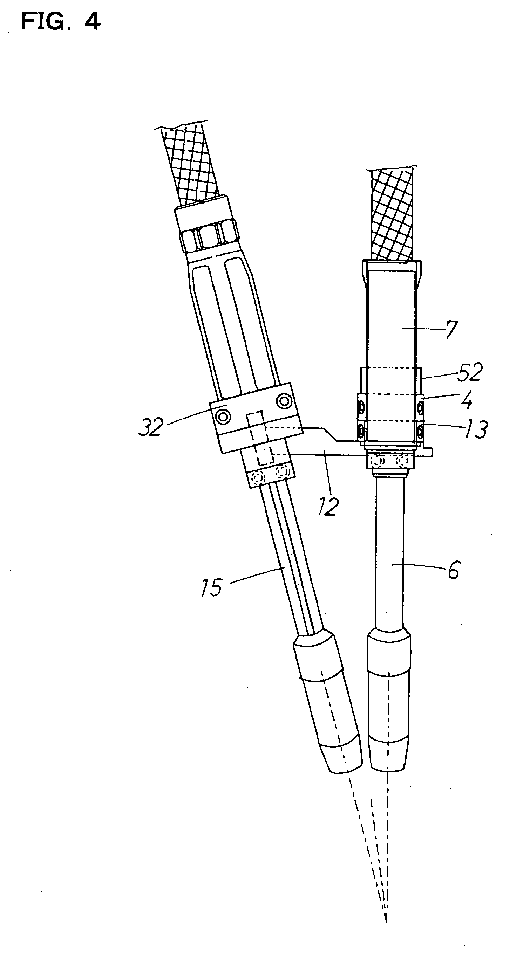

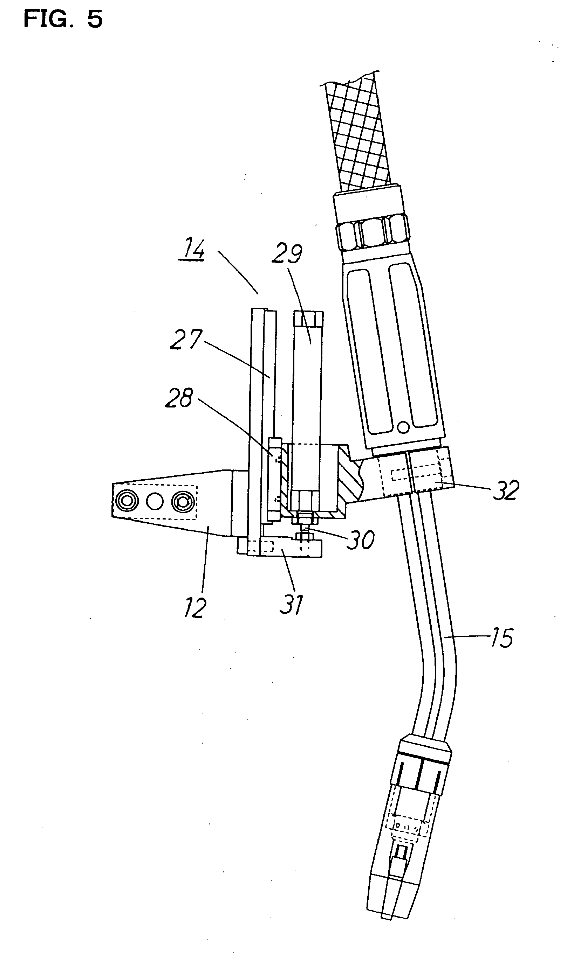

FIGS. 2 to 5 are views showing an example of a specific structure for attachment of the torches 6 and 15 to the arm tip 51 of the welding robot. FIGS. 2 to 5 show the tandem-torch state. The shock absorber 3 is attached to the arm tip 51 through a hand 18, which swings in the upward/downward direction, and a rotary finger 19. The first bracket 52, which is provided with the joint holder 4, is attached to the shock absorber. The tips of the torches 6 and 15 face toward the extension of a rotation centerline 20 of the rotary finger 19.

A linear guide 21 extending along the upward/downward direction in FIG. 2 is secured on the first bracket 52, and a cylinder 23 which makes up the first forward/backward driving device 5 is secured on a slider 22 guided by the linear guide. A joint block 25 is attached to the end of a rod 24 of the cylinder 23. The joint block is secured on the lower end of the first bracket 52. The body 7 of the first torch 6 is secured on the slider 22 through an attachment block 26, together with the first cylinder 23. A flexible hose (not shown) is connected to the head end side and the rod end side of the cylinder 23. The rod 24 extends when operation air is supplied to the rod end side through the hose, whereby the first torch 6 is withdrawn.

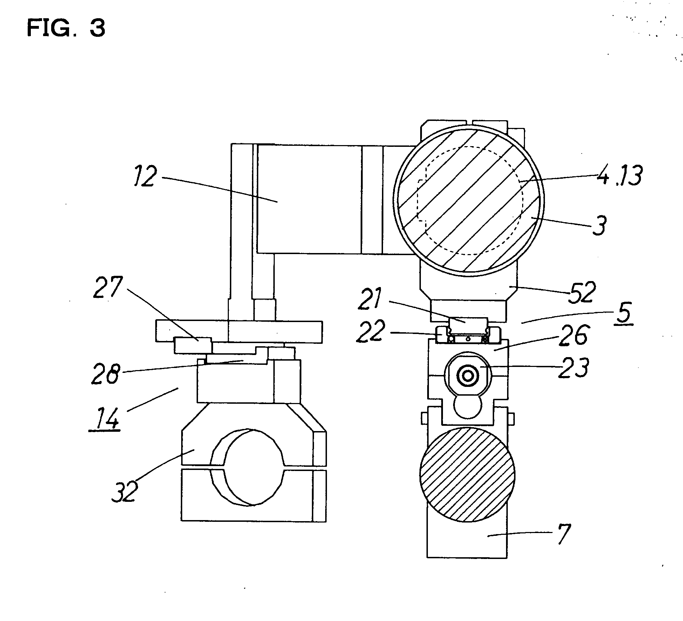

As shown in FIG. 3, the second bracket 12 which supports the second torch 15 is in the shape of the letter L when viewed from the top of FIG. 2. The joint 13 which is removably fitted into the joint holder 4 is secured on the base end of the second bracket 12. The second forward/backward driving device 14 which moves the second torch 15 forward/backward has the same structure as the first forward/backward driving device 5. Reference numeral 27 indicates a linear guide, reference numeral 29 indicates a second cylinder attached to a slider 28, reference numeral 30 indicates a rod, and reference numeral 31 indicates a connection block. In the example shown in FIG. 3, since a neck-fixed torch is used as the second torch, the shape of a securing block 32 which secures the torch differs from that of the first torch. The securing block 32 is secured on the slider 28 so that the second torch 15 is held to freely move forward/backward in the same manner as the first torch. The other end of the flexible hose connected to the head end side and the rod end side of the second cylinder 29 is connected to connection ports 33 and 34 of the joint 13 described below.

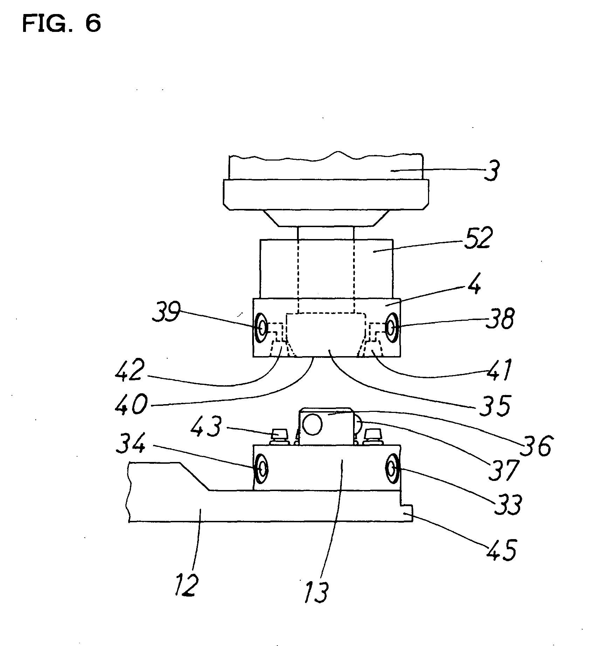

FIG. 6 is a view showing the cross section of the joint 13 and the joint holder 4. The joint holder 4 has a connection hole 35 which is provided at the center and opens downward. The joint 13 has a connection pin 36 inserted into the connection hole. Locking balls 37 which appear and disappear by the action of a piston provided in the joint 13 are provided at three locations of the periphery of the end of the connection pin 36. Depressions which engage with the locking balls are provided in the connection hole 35. The joint holder 4 and the joint 13 are coupled by inserting the connection pin 36 into the connection hole 35 and allowing the locking balls 37 to advance.

The joint holder 4 is provided with holes 41 and 42 which communicate with feed ports 38 and 39 which open at two locations in the periphery of the joint holder 4 and open in a joint surface 40 which touches the joint 13. The joint 13 is provided with nipples 43 which are inserted into the holes when the joint holder 4 and the joint 13 are coupled. The nipples 43 communicate with the connection ports 33 and 34 connected with the flexible hose connected to the second cylinder 29. The feed ports 38 and 39 are connected with an air supply of the robot via a flexible hose (not shown).

Air pressure which operates the piston (not shown) which moves the locking balls 37 forward/backward is supplied from the joint holder 4 to the joint 13 using a similar structure.

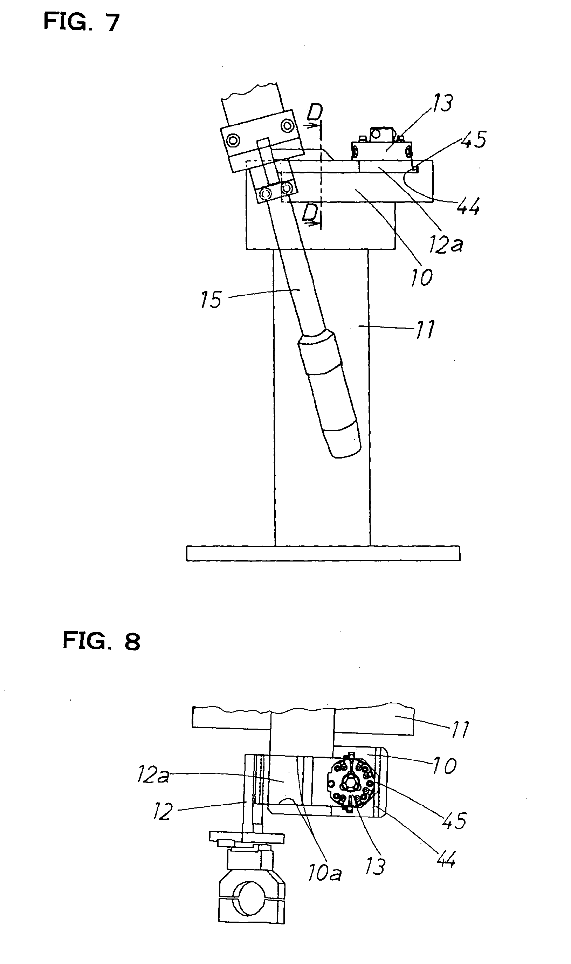

FIGS. 7 and 9 are views showing the torch holder 10 which holds the second torch 15 having the above-described structure when the second torch 15 stands by. A shallow grooved depression 10a which receives the rectangular base end 12a of the second bracket 12 is formed in the upper surface of the holder 10. A horizontal locking groove 44 is formed to block one end of the groove. A locking pawl 45 which is fitted into the locking groove 44 is formed on the base end of the second bracket 12. The second bracket 12 is transferred by the operation of the arm tip 51 of the robot so that the base end 12a is fitted into the groove 10a. The second bracket 12 is then moved in the direction in which the base end advances, whereby the second bracket 12 is placed on the torch holder 10 in a state in which the locking pawl 45 is fitted into the locking groove 44. The joint holder 4 and the joint 13 is separated in this state, and the arm tip 51 moves upward, whereby the second torch 15 is separated from the arm tip of the robot and held by the torch holder 10. When attaching the second torch 15 to the arm tip, the first bracket 52 moves downward above the torch holder 10 by the operation of the arm tip 51, whereby the joint holder 4 and the joint 13 touch and are coupled via the locking balls 37. The arm tip 51 moves in the direction away from the locking groove 44 and then moves upward, whereby the second torch 15 is attached to the arm tip of the welding robot.

### INDUSTRIAL APPLICABILITY

The torch switching method according to the invention achieves switching between the single-torch state and the tandem-torch state using a simple structure and a small number of torches. When using a neck-change torch as the first torch, it is possible to deal with various welding conditions by combining neck replacement and switching between the single-torch state and the tandem-torch state. Single-torch welding can be easily realized in the tandem-torch state by providing the forward/backward driving device described in detail in the embodiment, whereby lost time due to frequent torch switching can be reduced. Therefore, the invention enables various workpieces to be welded automatically and efficiently.

## Claims

1. A method of switching between a single-torch state and a tandem-torch state of a welding robot, wherein a first torch (6) is supported by an arm tip (51) of the welding robot through a first bracket (52) having a joint holder (4), and a second torch (15) supported by a second bracket (12) having a joint (13) is held by a torch holder (10) provided in a movable region of the arm tip, the method comprising:
moving the arm tip to the torch holder (5) and transferring the second torch between the arm tip and the torch holder, thereby achieving switching between a single-torch state in which only the first torch is attached to the arm tip and a tandem-torch state in which the first torch and the second torch are attached to the arm tip in a state in which the joint is coupled to the joint holder.

2. The method as defined in claim 1, wherein the second bracket (12) is provided with a forward/backward driving device (14) which moves the second torch (15) forward and backward in a longitudinal direction of the second torch (15).

3. The method as defined in claim 2, wherein the joint holder and the joint are provided with fluid channels which communicate when the joint holder and the joint are coupled, and a working fluid is supplied to the fluid channels from the joint holder, whereby the forward/backward operation of the forward/backward driving device is enabled.

4. The method as defined in claim 2 or 3, wherein the first bracket (52) is provided with a forward/backward driving device (5) which moves the first torch (6) forward and backward in a longitudinal direction of the first torch (6).
